# EUROPÄISCHE PATENTANMELDUNG

(11) **EP 0 561 234 A1**
(43) Veröffentlichungstag der Anmeldung: **22.09.1993**
(21) Anmeldenummer: 93103514.1
(22) Anmeldetag: 05.03.1993
(51) Int. Cl.: B29C 47/66, B29C 47/92

(54) **Verfahren und Vorrichtung zur Temperaturkonstanthaltung des Extrudates eines Schneckenextruders**

(30) Priorität: 13.03.1992 DE 4208284
(71) Anmelder: PAUL TROESTER MASCHINENFABRIK, D-30519 Hannover (DE)
(72) Erfinder: Klein, Heinz, W-3017 Pattensen (DE)
(74) Vertreter: Junius, Walther, Dr.

(57) **Zusammenfassung**

Die Erfindung betrifft ein Verfahren zur Konstanthaltung der Ausstoßtemperatur des Extrudates eines Schneckenextruders, welcher mit verschieb- oder verschwenkbaren Körpern (13) versehen ist, welche in den Innenraum des Extruders an Stellen hineinragen, an denen das Fördergewinde der Schnecke (2) ringnutförmig unterbrochen ist, einen zur Durchführung dieses Verfahrens geeigneten Schneckenextruder sowie einen Prozessor (16) für das Betreiben dieses Schneckenextruders.Es ist die Aufgabe der Erfindung, die Extrusionsmenge pro Zeiteinheit bei Einhaltung einer bestimmten vorgegebenen Temperatur in weiten Grenzen variieren zu können.Die Erfindung erreicht dieses dadurch, daß die Körper entsprechend einer Änderung der Extrusionstemperatur in ihrer Eintauchtiefe verstellt werden. Dabei kann es durchaus für die gewünschte Bearbeitung des zu extrudierenden Materiales vorteilhaft sein, wenn ein Teil der Körper (8) in einer bestimmten, für den gewünschten Plastifizierungs- und Homogenisierungsgrad vorgegebenen Stellung während des Arbeitsprozesses fest belassen wird, und wenn ein anderer Teil der Körper (13) während des Arbeitsprozesses in der Eintauchtiefe während des Über- oder Unterschreitens der einzu-haltenden Austrittstemperatur des Extrudates verstellt wird.

## Beschreibung

Die Erfindung betrifft ein Verfahren zur Konstanthaltung der Ausstoßtemperatur des Extrudates eines Schneckenextruders, welcher mit verschieb- oder verschwenkbaren Körpern versehen ist, welche in den Innenraum des Extruders an Stellen hineinragen, an denen das Fördergewinde der Schnecke ringnutförmig unterbrochen ist, einen zur Durchführung dieses Verfahrens geeigneten Schneckenextruder sowie einen Prozessor für das Betreiben dieses Schneckenextruders.

Seit zwei Jahrzehnten werden Stiftzylinder-Schneckenextruder (DE 31 50 719) in der Gummi- und Kunststoffindustrie eingesetzt, um schwer bearbeitbare Materialien schneller und besser plastifizieren und aufschließen zu können. Im Laufe dieser Jahrzehnte wurden die Extruder immer mehr vervollkommnet. Unverschiebbar eingesetzte Stifte erhielten eine Form, die den Stiftbruch verhindern. Stiftbruch-Warngeräte (DE 32 21 472) und -vorwarngeräte (DE 3 502 437), die bereits bei elastischer Verbiegung der Stifte ansprechen, wurden entwickelt. Um die Stifte nicht einzeln ausbauen zu müssen, wenn der Extruder einer Reinigung unterzogen werden soll und die Schnecke hierzu aus dem Extruder herausgenommen werden soll, wurden hydraulische (DE 35 03 911) und mechanische Antriebe (DE 35 06 424) entwickelt, mit denen die Stifte aus ihrer Arbeitsstellung in eine Außerbetriebsstellung verschoben werden konnten. Durch den Einsatz zusätzlicher an sich bekannter Arbeitsmittel, wie beispielsweise in die Schnecke eingesetzte Torpedostücke, Scherteile und durch in den Zylinder eingeschnittene Nuten, konnten weitere Verbesserungen der Plastifizierwirkung erzielt werden.

Es ist ein altes Problem der Extrudertechnik, optimale Betriebsbedingungen für die Ausstoßmenge, die Ausstoßtemperatur, den Plastifizierungsgrad und den Ausstoßdruck zu finden. Hat man für eine bestimmte gewünschte Ausstoßmenge pro Zeiteinheit einen guten Plastifizierungsgrad aufgefunden und hat man auch die Temperatur des Extrudates auf Werte bringen können, die für die nachfolgende Bearbeitung des Extrudates günstig sind, dann lassen sich nicht diese günstigen Werte erhalten, wenn beispielsweise die Drehzahl geändert werden soll, um den Plastifizierungsgrad noch weiter zu verbessern. Es läßt sich auch nicht die Ausstoßmenge pro Zeiteinheit verändern, ohne daß der Plastifizierungsgrad verändert wird und die Temperatur des extrudierten Materiales andere Werte annimmt. Das hat zur Folge, daß bei einer günstigen Einstellung des Extruders die in der Fertigungsstraße nachfolgenden Maschinen oftmals nicht optimal eingesetzt werden können, weil beispielsweise die Extrusionstemperatur zu hoch ist oder die Ausstoßmenge pro Zeiteinheit nicht die gewünschten optimalen Werte erreicht.

Die Erfindung vermeidet die Nachteile des Standes der Technik. Es ist die Aufgabe der Erfindung, die Extrusionsmenge pro Zeiteinheit bei Einhaltung einer bestimmten vorgegebenen Temperatur in weiten Grenzen variieren zu können.

Die Erfindung erreicht dieses durch die Anwendung des Schneckenextruders der eingangs genannten Art dadurch, daß die Körper entsprechend einer Änderung der Extrusionstemperatur in ihrer Eintauchtiefe verstellt werden.

Diese Verstellung der zu verstellenden Körper in Abhängigkeit von der Austrittstemperatur des Extrudates eröffnet die Möglichkeit, die Ausstoßmenge pro Zeiteinheit in weiten Grenzen variieren zu können, ohne daß ungenügend plastifiziertes Extrudat den Extruder verläßt und ohne daß die Temperatur des Extrudates beim Austritt aus dem Extruder sich verändert. Das bringt ganz erhebliche Vorteile für die in der Fertigungsstraße nachfolgend angeordneten Maschinen. Diese können jetzt auf optimale Bearbeitungsparameter eingestellt werden, ihre Arbeitsgeschwindigkeit kann in weiten Grenzen variiert werden, weil in weiten Grenzen eine Variation der Ausstoßmenge pro Zeiteinheit bei gleichbleibender Temperatur und gleichbleibendem Plastifizierungsgrad im Extruder ermöglicht ist.

In erster Linie handelt es sich bei den zu verstellenden Körpern um die Stifte eines Stiftzylinderextruders, wobei es sich sowohl um radial, aber auch um tangential in den Innenraum des Zylinders eintauchende Stifte handeln kann. Aber auch andere in den Innenraum eintauchende Körper sind möglich, z.B. Kreisscheibensegmente.

Dabei kann es durchaus für die gewünschte Bearbeitung des zu extrudierenden Materiales vorteilhaft sein, wenn ein Teil der Körper in einer bestimmten, für den gewünschten Plastifizierungs- und Homogenisierungsgrad vorgegebenen Stellung während des Arbeitsprozesses fest belassen wird, und wenn ein anderer Teil der Körper während des Arbeitsprozesses in der Eintauchtiefe während des Über- oder Unterschreitens der einzuhaltenden Austrittstemperatur des Extrudates verstellt wird.

Als zweckmäßig hat es sich erwiesen, wenn man in einer Ebene sowohl feststehende als auch in der Eintauchtiefe während des Arbeitsprozesses zu verstellende Körper anordnet, vorzugsweise derart, daß man zwischen je zwei oder drei feststehenden Körpern einen zu verstellenden Körper anordnet.

Um die Belastungen der Körper zu erniedrigen, ist es zweckmäßig, wenn man in verschiedenen Radialebenen die Eintauchtiefen unterschiedlich einstellt, vorzugsweise in den dem Einzug benachbarten Radialebenen weniger tief als in den dem Einzug abgekehrten Ebenen.

Zur Ausführung dieses Verfahrens verwendet man einen Schneckenextruder, bestehend aus einem Zylinder, in welchem eine Schnecke drehbar gelagert ist, welche ringförmige Ausnehmungen ihres Fördergewindes aufweist, in welche Körper radial eintauchen, die im oder am Zylinder verstellbar gelagert sind. Das Wesentliche bei dem erfindungsgemäßen Schneckenextruder ist es, daß die Körper mit einer von einer Steuerungsvorrichtung gesteuerten Verstellvorrichtung versehen sind, wobei an den Eingang der Steuerungsvorrichtung ein Temperaturfühler der Extrudataustrittstemperatur angeschlossen ist, während an den Ausgang mindestens ein Motor zur Verstellung der verstellbaren Körper angeschlossen ist und die Steuerungsvorrichtung eine Sollwert-Istwert-Vergleichsschaltung aufweist.

Vorzgsweise gestaltet man die Extrusionsanlage so, daß ein Teil der Körper für den Arbeitsprozeß auf eine bestimmte, für den gewünschten Plastifizierungs- und Homogenisierungsgrad vorgegebene Eintauchtiefe eingestellt ist, und daß ein anderer Teil der Körper mittels der Steurungsvorrichtung während des Arbeitsprozesses mit Mitteln zur Verstellung versehen ist, wobei an den Eingang der Steuerungsvorrichtung ein Temperaturfühler der Extrudataustrittstemperatur angeschlossen ist, während an den Ausgang mindestens ein Motor zur Verstellung der verstellbaren Körper angeschlossen ist und die Steuerungsvorrichtung eine Sollwert-Istwert-Vergleichsschaltung aufweist.

Dabei können als Verstellvorrichtungen für die Verstellung der Körper z.B. Elektromotore, Hydraulikmotore, Hydraulik-Kolben-Zylinder-Einheiten u.a. eingesetzt werden.

Eine besonders feine, dem zu extrudierenden Material angepaßte Ausführungsform läßt sich dadurch schaffen, daß mehrere motorisch angetriebene Verstellvorrichtungen für die zu verstellenden Körper in verschiedenen Stiftebenen vorgesehen sind, die vom Steuergerät unterschiedliche Steuersignale erhalten.

Zur Ausführung des Verfahrens benutzt man einen Prozessor für das Betreiben eines Schneckenextruders, an dessen Eingang ein Vorwähler für die Schneckendrehzahl, ein Vorwähler für die Extrudattemperatur und ein Geber der Extrudattemperatur angeschlossen sind, während an die Ausgänge des Prozessors der Antriebsmotor für die Schnecke sowie Verstellmotore für während des Arbeitsprozesses in Abhängigkeit von der Extrudatausstoßtemperatur zu verstellende Körper angeschlossen sind.

Das Wesen der Erfindung ist nachstehend anhand von in der Zeichnung schematisch dargestellten Ausführungsbeispielen näher erläutert. Es zeigen:

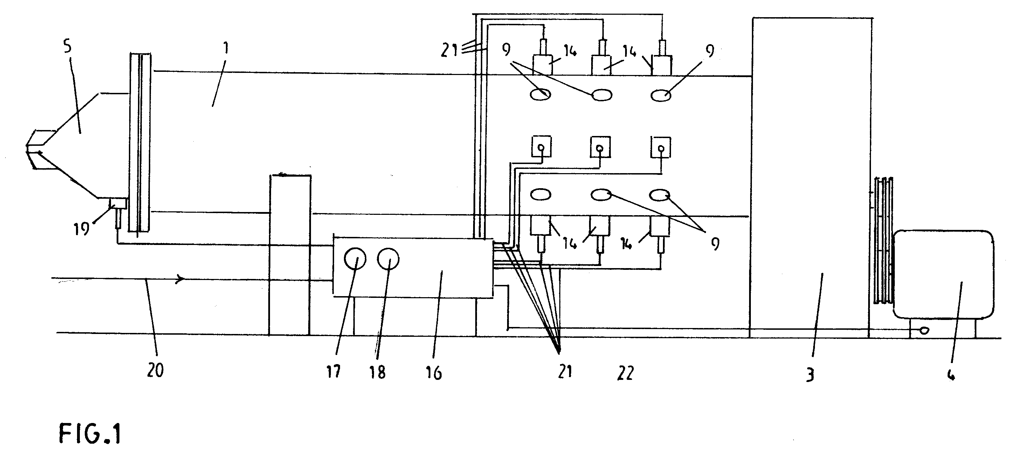

- Fig. 1: eine Ansicht eines Stiftzylinderextruders,
- Fig. 2: einen Schnitt durch eine Stiftebene.
- Fig. 3: einen Schnitt durch einen Extruder mit verstellbaren Kreissegmentkörpern,
- Fig. 4: einen Schnitt durch einen Extruder mit tangential in den Innenraum hineinragenden Stiften.

Der Stiftzylinderextruder besteht aus einem Zylinder 1, in welchem drehbar die Schnecke 2 angeordnet ist, einem Getriebe 3 und einem Motor 4 für den Antrieb der Schnecke sowie einem Spritzkopf 5. Der Zylinder 1 ist in seinem Inneren mit einer Zylinderbuchse 7 versehen. Radiale Bohrungen 6 erstrecken sich durch die Wand des Zylinders 1 und durch die Zylinderbuchse 7. In diese radialen Bohrungen sind einerseits unverstellbare Stifte 8 eingesetzt, welche durch eine Arretierschraube 9 in ihrer unverschiebbaren Stellung gehalten werden. Die Stifte 8 weisen einen in den Innenraum des Zylinders hereinragenden Teil 10 auf, durch den die Plastifizierarbeit ausgeführt wird, an diesen Teil schließt sich ein im Durchmesser stärkerer Teil 11 an, welcher den gleichen Durchmesser wie die Bohrung in der Zylinderbuchse 7 aufweist. Die mit einem Absatz ausgeführte Bohrung im Zylinder 1 ist größer ausgeführt, damit unterschiedliche Dehnungen von Zylinderbuchse 7 und Zylinder 1 keine Auswirkungen auf die Stifte haben. Der Stift 8 weist schließlich ein Endteil mit noch größerem Durchmesser auf, welches sich mit seinem Absatz gegen den Absatz 12 in der Bohrung 6 abstützt. Gegen diesen Absatz wird der Stiftteil 11 durch die Arretierschraube 9 so angedrückt, daß er noch gleitfähig bleibt. Dadurch ist eine Verschiebung des Stiftes 8 in Radialrichtung nicht möglich, während eine Verschiebung am Absatz 12 und an der Stirnseite der Schraube 9 möglich ist.

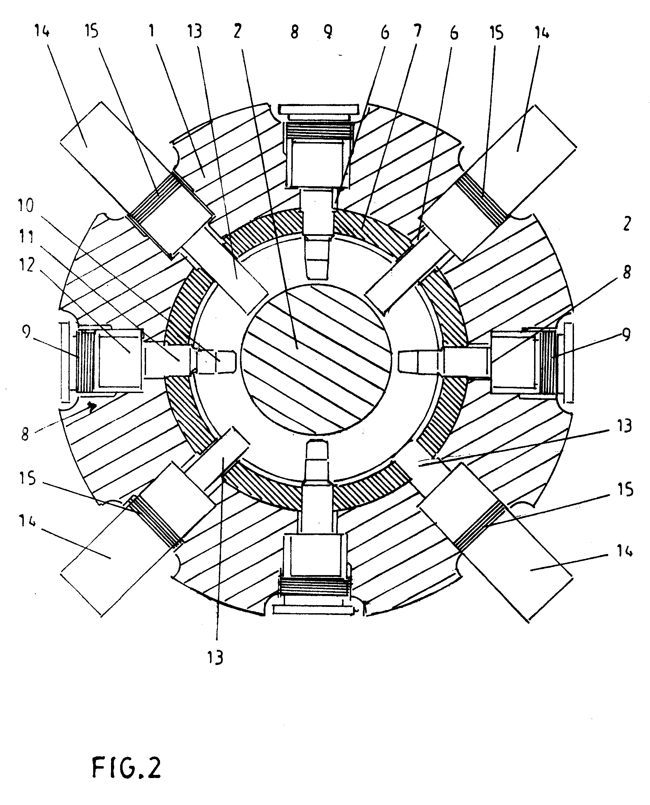

Zwischen diesen Stiften 8 sind Stifte 13 vorgesehen, welche mittels einer Verschiebevorrichtung verschiebbar sind, die in dem Gehäuse 14 untergebracht ist. Dieses Gehäuse 14 weist auf seiner Außenseite ein Gewinde 15 auf, welches in das Innengewinde einschraubbar ist, in welches bei den Stiften 8 die Arretierschraube 9 eingeschraubt ist. Dieses Gehäuse wird soweit in das Gewinde eingeschraubt, bis es sich mit seiner Stirnseite auf dem Absatz 12 abstützt. In dem gezeichneten Ausführungsbeispiel der Fig. 2 sind die beiden oberen Stifte 13 voll in den Innenraum des Zylinders 1 eingefahren, während der Stift 13 unten links nur halb und der Stift 13 unten rechts gar nicht in den Innenraum eingefahren ist. Innerhalb des Gehäuses 14 ist die Stiftverstellvorrichtung so angeordnet, daß eine durch unterschiedliche Dehnungen zwischen der Zylinderbuchse 7 und dem Zylinder 1 hervorgerufene Verschiebung der Verstellvorrichtung gegenüber der Hülse 14 möglich ist.

Die Steuerung dieser in den Hülsen 14 untergebrachten Verstellvorrichtungen für die Stifte 13 wird durch den Prozessor 16 bewirkt. Dieser weist eine Einstellvorrichtung 17 für die vorzugebende Temperatur und eine Einstellvorrichtung 18 für die Drehzahl der Schnecke auf. An den Eingang ist ein im Spritzkopf 5 untergebrachter Temperaturgeber 19 angeschlossen, es kann auch über die Leitung 20 eine Ferneinstellung für die Drehzahl der Schnecke an den Eingang des Prozessors 16 angeschlossen sein. An die Ausgänge sind Leitungen 21 angeschlossen, die zu den verschiedenen Verstellvorrichtungen für die Stifte 13 in den Gehäusen 14 führen. Weiter ist eine Leitung 22 an den Ausgang angeschlossen, die zum Motor 4 führt.

Ebenso, wie auf diese Weise die Ausstoßmenge pro Zeiteinheit in weiten Grenzen ohne Beeinflussung der Ausstoßtemperatur variiert werden kann, kann bei gleichbleibender Ausstoßleistung die Temperatur durch verschieden tiefes Einsenken der Stifte 13 in den Innenraum des Zylinders variiert werden, falls dieses für nachfolgende Bearbeitungsprozesse von Vorteil ist.

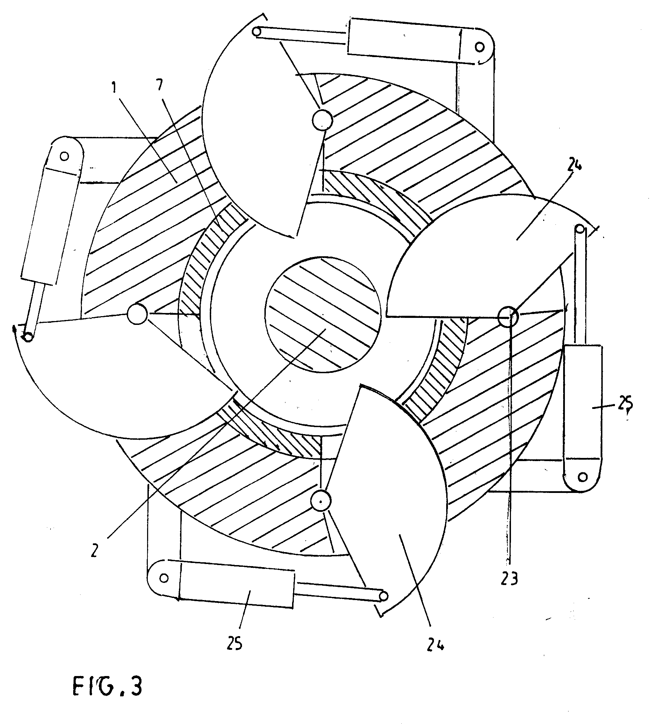

Im Ausführungsbeispiel der Fig. 3 sind es um die Achse 23 verschwenkbare Kreissegmentscheiben 24, an deren außerhalb des Zylinders 1 befindlichem Ende eine als Verstellmotor dienende Hydraulik-Kolben-Zylinder-Einheit 25 angreift, die mit ihrem anderen Ende am Zylinder 1 angelenkt ist. Die rechte Kreissegmentscheibe 24 ist voll in die das Schneckengewinde unterbrechende Ringnut eingeschwenkt, die linke ist ausgeschwenkt, die obere und untere zur Hälfte eingeschwenkt.

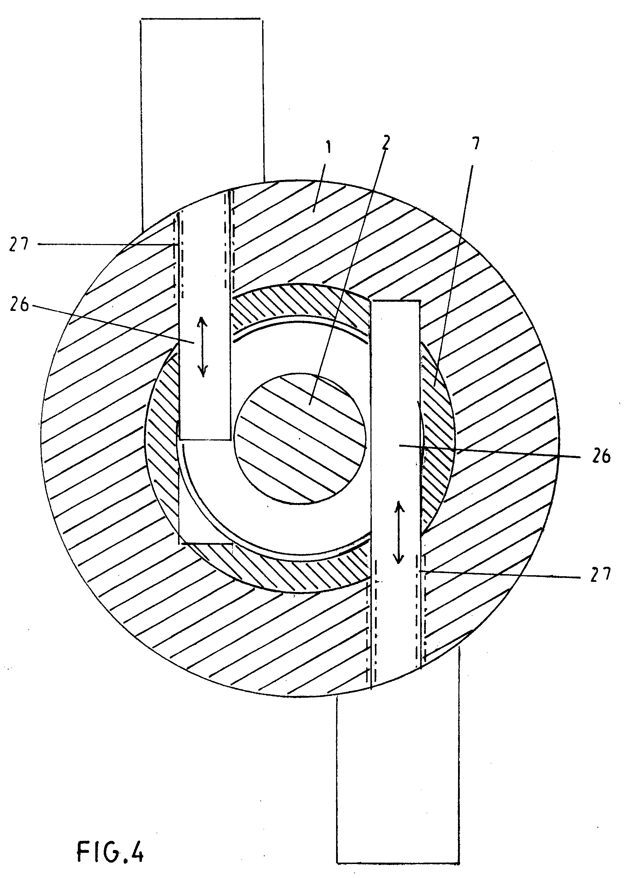

Im Ausführungsbeispiel der Fig. 4 sind die verstellbaren Körper durch tangential in den Innenraum des Zylinders 1 einschiebbare Stifte 26 gebildet, welche in einem Gewinde 27 verdrehbar in der Zylinderwandung gelagert sind. Diese Stifte werden durch Drehen mittels eines Drehmotors mehr oder weniger tief in den Innenraum des Zylinders eingeschoben.

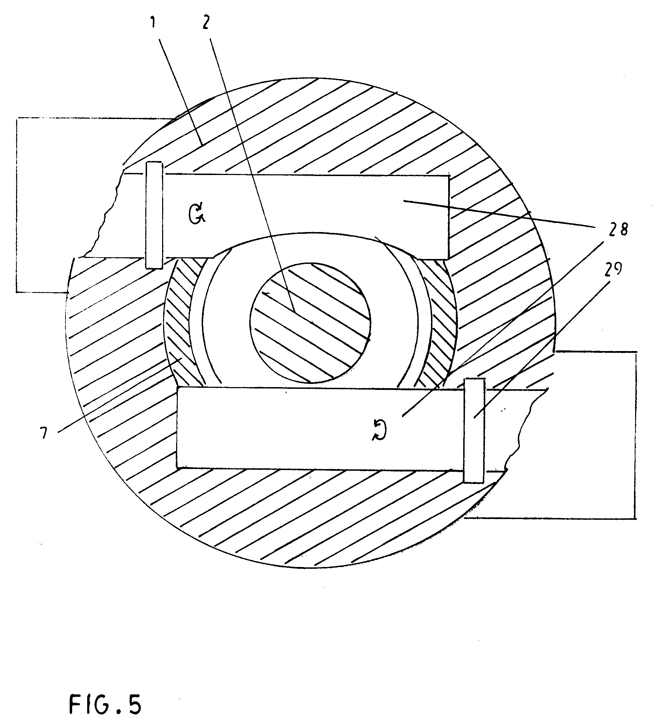

Im Ausführungsbeispiel der Fig. 5 sind die tangential in den Innenraum hineinragenden Stifte 28 unverschiebbar mittels eines Bundringes 29 gelagert. Sie sind im Inneren des Zylinders 1 unrund. Durch Verdrehung können sie verschieden tief in die Nut im Schneckengewinde eingreifen.

Diese Variationsmöglichkeit der Ausstoßmenge pro Zeiteinheit ohne Veränderung des Plastifizierungsgrades und ohne Veränderung der Ausstoßtemperatur wird einem langgehegten Bedürfnis in der einschlägigen Industrie gerecht, der es nun möglich ist, die in den Bearbeitungsstraßen nachfolgenden Maschinen leichter auf optimale Parameter einzusteuern.

Diese technische Möglichkeit wird durch die beschriebene Temperatur-Eintauchtiefen-Schneckendrehzahl-Regelung eröffnet, in der für die Temperatur und die Ausstoßleistung pro Zeiteinheit Sollwerte eingegeben werden und vom Prozeßor die erforderlichen Werte der Eintauchtiefe und der Schneckendrehzahl eingestellt werden.

Ein weiterer Vorteil des Einsatzes eines Prozessors besteht darin, daß in diesem Verfahrensabläufe gespeichert werden können, mit denen unter Berücksichtigung der eingegebenen und der errechneten Parameter der Prozeßablauf gesteuert werden kann.

### Liste der Bezugszeichen:

- 1: Zylinder
- 2: Schnecke
- 3: Getriebe
- 4: Motor
- 5: Spritzkopf
- 6: Bohrung
- 7: Zylinderbuchse
- 8: Stift
- 9: Arretierschraube
- 10: Stiftteil
- 11: Stiftteil
- 12: Absatz
- 13: Stifte
- 14: Gehäuse
- 15: Gewinde
- 16: Prozessor
- 17: Einstellvorrichtung Temperatur
- 18: Einstellvorrichtung Ausstoßmenge pro Zeit
- 19: Temperaturgeber
- 20: Leitung
- 21: Leitung
- 22: Leitung
- 23: Achse
- 24: Kreissegmentscheibe
- 25: Kolben-Zylinder-Einheit
- 26: Stift
- 27: Gewinde
- 28: Stift
- 29: Bundring
- 30: Drehmotor
- 31: Verschwenkmotor

## Patentansprüche

1. Verfahren zur Konstanthaltung der Ausstoßtemperatur des Extrudates eines Schneckenextruders, welcher mit verschieb- oder verschwenkbaren Körpern versehen ist, welche radial in den Innenraum des Extruders an Stellen hineinragen, an denen das Fördergewinde der Schnecke ringnutförmig unterbrochen ist,
dadurch gekennzeichnet,
daß die Körper entsprechend einer Änderung der Extrusionstemperatur in ihrer Eintauchtiefe verstellt werden.

2. Verfahren nach Anspruch 1,
dadurch gekennzeichnet,
daß ein Teil der Körper in einer bestimmten, für den gewünschten Plastifizierungs- und Homogenisierungsgrad vorgegebenen Stellung während des Arbeitsprozesses fest belassen wird, und daß ein anderer Teil der Körper während des Arbeitsprozesses in der Eintauchtiefe während des Über- oder Unterschreitens der einzuhaltenden Austrittstemperatur des Extrudates verstellt wird.

3. Verfahren nach Anspruch 1 und 2,
dadurch gekennzeichnet,
daß man in einer Ebene sowohl feststehende als auch in der Eintauchtiefe während des Arbeitsprozesses zu verstellende Körper anordnet, vorzugsweise derart, daß man zwischen je zwei oder drei feststehenden Körpern einen zu verstellenden Körper anordnet.

4. Verfahren nach Anspruch 1 und 2,
dadurch gekennzeichnet,
daß man in verschiedenen Radialebenen die Eintauchtiefen der verstellbaren Körper unterschiedlich einstellt, vorzugsweise in den dem Einzug benachbarten Ebenen weniger tief als in den dem Einzug abgekehrten Ebenen.

5. Schneckenextruder,
bestehend aus einem Zylinder, in welchem eine Schnecke drehbar gelagert ist, welche ringförmige Ausnehmungen ihres Fördergewindes aufweist, in welche Körper radial eintauchen, die im oder am Zylinder verstellbar gelagert sind,
dadurch gekennzeichnet,
daß die Körper (13, 24, 26, 28) mit einer von einer Steuerungsvorrichtung (16) gesteuerten Verstellvorrichtung (14, 25, 30, 31) versehen sind, wobei an den Eingang der Steuerungsvorrichtung (16) ein Temperaturfühler (19) der Extrudataustrittstemperatur angeschlossen ist, während an den Ausgang mindestens ein Motor zur Verstellung der verstellbaren Körper angeschlossen ist und die Steuerungsvorrichtung (16) eine Sollwert-Istwert-Vergleichsschaltung aufweist.

6. Schneckenextruder nach Anspruch 5,
dadurch gekennzeichnet,
daß ein Teil der Körper (8) für den Arbeitsprozeß auf eine bestimmte, für den gewünschten Plastifizierungs- und Homogenisierungsgrad vorgegebene Eintauchtiefe eingestellt ist,
und daß ein anderer Teil der Körper (13) mittels der Steurungsvorrichtung (16) während des Arbeitsprozesses mit Mitteln zur Verstellung versehen ist,
wobei an den Eingang der Steuerungsvorrichtung (16) ein Temperaturfühler (19) der Extrudataustrittstemperatur angeschlossen ist,
während an den Ausgang mindestens ein Motor zur Verstellung der verstellbaren Körper angeschlossen ist und die Steuerungsvorrichtung (16) eine Sollwert-Istwert-Vergleichsschaltung aufweist.

7. Schneckenextruder nach Anspruch 4,
dadurch gekennzeichnet,
daß in einer Ebene sowohl feststehende als auch in der Eintauchtiefe während des Arbeitsprozesses zu verstellende Körper angeordnet sind, vorzugsweise derart, daß zwischen je zwei oder drei feststehenden Körpern ein zu verstellender Körper angeordnet ist.

8. Schneckenextruder nach Anspruch 4,
dadurch gekennzeichnet,
daß mehrere Verstellvorrichtungen für Körper (13) in verschiedenen Radialebenen vorgesehen sind, die vom Steuergerät (16) unterschiedliche Steuersignale erhalten.

9. Schneckenextruder nach Anspruch 1,
dadurch gekennzeichnet,
daß die zu verstellenden Körper (13) Stifte eines Stiftzylinderextruders oder verschwenkbare Kreissegmentscheiben sind,
und daß die Verstellvorrichtungen Elektromotore, hydraulische Motore oder Kolbenzylinder-Einheiten als Antrieb aufweisen.

10. Prozessor (16) für das Betreiben eines mit verstellbaren Körpern versehenen Extruders,
an dessen Eingang
- ein Vorwähler (18) für die Schneckendrehzahl
- ein Vorwähler (17) für die Extrudattemperatur
- ein Geber (19) für die Extrudattemperatur
und an dessen Ausgänge
- der Antriebsmotor (4) für die Schnecke (2)
- Verstellmotore für während des Arbeitsprozesses in Abhängigkeit von der Extrudat-Ausstoßtemperatur zu verstellende Körper (13)
angeschlossen sind.
